# EUROPEAN PATENT SPECIFICATION

(11) **EP 0 487 742 B1**
(45) Date of publication and mention of the grant of the patent: **02.09.1998**
(21) Application number: 91910637.7
(22) Date of filing: 11.06.1991
(51) Int. Cl.: G06F 3/147, G09G 3/36

(54) **FLAT DISPLAYING DEVICE AND DEVICE FOR DRIVING DISPLAYING ELEMENTS**
FLACHE ANZEIGETAFEL UND GERÄT ZUM STEUERN VON ANZEIGEELEMENTEN
PANNEAU D'AFFICHAGE PLAT ET DISPOSITIF DE PILOTAGE DES ELEMENTS D'AFFICHAGE

(30) Priority: 18.06.1990 JP 159416/90
(43) Date of publication of application: 03.06.1992
(60) Divisional application: 98200118.2
(73) Proprietor: SEIKO EPSON CORPORATION, Shinjuku-ku Tokyo 163-08 (JP)
(72) Inventor: IMAMURA, Youichi, Nagano-ken 392 (JP)
(74) Representative: Sturt, Clifford Mark
(86) International application number: PCT/JP91/00785
(87) International publication number: WO 91/20075

(56) References cited:
- EP-A- 0 162 969
- EP-A- 0 326 158
- EP-A- 0 419 910
- JP-A- 4 997 593
- JP-A- 6 150 195
- JP-A-52 100 997
- JP-A-52 128 178
- JP-A-55 117 190
- US-A- 4 922 448
- PATENT ABSTRACTS OF JAPAN vol. 7, no. 234 (P-230)18 October 1983
- PATENT ABSTRACTS OF JAPAN vol. 2, no. 11 (E-007)26 January 1978
- PATENT ABSTRACTS OF JAPAN vol. 1, no. 156 (E-074)13 December 1977
- PROCEEDINGS OF THE SID. vol. 30, no. 2, 1989, LOS ANGELES US pages 131 - 136 , XP114035 J.OHWADA ET AL. 'Peripheral Circuit Integrated Poly-Si TFT LCD with Gray scale Representation'

## Description

### Technical Field:

The present invention relates generally to a flat display such as a liquid crystal display (LCD) and a plasma display panel and also applied devices thereof, and more particularly, to a flat display device having such a configuration that a display body module and a display control unit for controlling the display are separately disposed as well as to a display body driving device.

### Background Arts:

A portable personal computer and word processor known as a so-called laptop type generally have hitherto incorporated an opening/closing type flat display unit. Middle-and-large-sized liquid crystal display devices mounted therein each consist of, as illustrated in FIG. 9, a liquid crystal display control unit 10 built in the apparatus body and a flat liquid crystal display module unit 20 provided inwardly of an opening/closing cover so that these units are separately independently disposed. The liquid crystal display control unit 10 includes a liquid crystal module controller 12 and an unillustrated microprocessor unit (MPU). This liquid crystal module controller 12 supplies a variety of control signals and clock signals to the liquid crystal display module unit 20. The liquid crystal display module unit 20 has:, e.g., a simple matrix type liquid crystal display panel (matrix liquid crystal display elements) 22; a signal electrode driving circuit (X drivers) 24 and a scan electrode driving circuit (Y drivers) 26 which are TAB-packaged in peripheral regions (frame) of the panel 22; and a liquid crystal power source circuit 28 for generating high liquid crystal driving voltages (reference voltages) V₀ - V₅. The signal electrode driving circuit 24 is composed of a plurality of signal electrode driver semiconductor integrated circuits 24₁ - 24m which are cascade-connected. The signal electrode driving circuit 24 supplies driver outputs per picture line to, e.g., the total M-pieces of signal electrodes. More specifically, data signals D0 - D7 are sequentially taken in a shift register within the signal electrode driving circuit 24 by pixel clocks (shift clock pulses) XSCL. When the signals (M bits) per picture line are taken in, the data signals within the shift register are transmitted in parallel to a data latch circuit by scan line synchronous signals (data signal latch clocks LP) YSCL. The data signals undergo series/parallel conversions. The data latch circuit holds a signal voltage per line during a 1-scan period. Based on this signal voltage, a selection switch circuit sets output voltages of drivers connected to the signal electrodes either in a selection state or in a non-selection state. The AC-transforming clock FR is a clock for transforming each voltage described above in an AC waveform in order to prevent a deterioration of the liquid crystal elements due to a DC drive. A forced blank display signal DF is a conceived as a signal for forcibly bringing a liquid crystal picture into a blank display state. The scan electrode driving circuit 26 consists of a plurality of scan electrode driver semiconductor integrated circuits 26₁ - 26n which are cascade-connected. This circuit 26 works to give a section voltage to only one of the total N-pieces of scan electrodes and non-selection voltages to the rest of them, i.e., (N - 1)-pieces of scan electrodes. A 1-scan line period is started by the scan start pulse (frame start signal) SP. Every time a scan line synchronous signal YSCL (data signal latch clock LP) comes, the selection voltages are sequentially impressed on the scan electrodes from the first line electrode to the N-th line electrode (line sequence display). The liquid crystal power source circuit 28 disposed on the side of the liquid crystal display module unit 20 generates a plurality of liquid crystal driving voltages V₀ - V₅ selected by the selection switch of the scan electrode driving circuit 26 and the signal electrode driving circuit 24. The liquid crystal power source circuit 28 is set in power on/off states by the forced blank display signal $\overline{\text{DF}}$.

The liquid crystal display control unit 10 built in the apparatus body is connected to the flat liquid crystal display module unit 20 typically through a hinge-connected movable part by using a flexible cable 30. With this arrangement, the cable 30 itself is bent every time the opening/closing cover on the side of the flat liquid crystal display module unit 20 is opened and closed. Signal lines of the cable 30 tend to be damaged or disconnected due to physical factors. If a part of the signal lines are disconnected, there arises a situation where no AC drive is effected in such a state that a DC voltage (DC component) remains impressed on, e.g., a liquid crystal display panel 22. Caused is a deterioration of the liquid crystal display panel 22 which is more expensive than other parts and therefore difficult to exchange. This liquid crystal deterioration is conceived as a factor of obstacle to a display quality and a life-span thereof. This is a serious problem to the display device based on the visual recognizability. Among the signals supplied to the liquid crystal display module unit 20 from the liquid crystal module controller 12, the signals which may induce a decline of the AC drive of the liquid crystal display panel 22 are a scan start pulse SP, a scan line synchronous signal YSCL (data signal latch clock LP), an AC-transforming clock FR and a logic-side power source voltage Vcc. When some operational abnormalities occur in the liquid crystal module controller 12 and the microprocessor unit (MPU), abnormalities arise in the respective signals. There exists a possibility where the situation similar to the above-mentioned may take place.

A previous attempt to prevent degradation of a liquid crystal display by signal abnormalities is shown in Japanese Patent Publication No. 52-100997. This provides a detection circuit 7 which monitors the AC signal supplied to the liquid crystal controller. If the AC signal stops the detection circuit causes the liquid crystal controller to set all of the electrode voltages of the liquid crystal display to the same voltage value.

Another approach is shown in Japanese Patent Publication No. 52-128178. This describes a means of lengthening the life of a liquid crystal display in a clock by preventing DC drive of the liquid crystal. This is achieved by an oscillation stoppage detection circuit 19 which monitors the oscillation of the time reference source. In response to stopping of the oscillating signal, the stoppage detection circuit sets the output signals from the control circuit corresponding to all of the electrodes to a common value.

Both of these known systems suffer from the disadvantage that only the basic oscillating signal used to drive the entire system is monitored. In practice, even if this basic oscillating signal is being produced, it is still possible for DC driving of the display to occur.

Expanding the problem about the DC drive of the liquid crystal display body, this can be generalised to a problem associated with a signal abnormality on the side of the liquid crystal module unit. Besides, in case of a wall-mounted TV, because of a display control unit and a display panel being disposed in remote places, a problem in terms of deteriorating the display quality is produced due to attenuation of signal level and influences of noises as well as to a stop of signal. Further, the problems also happen not only in the liquid crystal displays but also plasma displays.

Accordingly, it is an object of the present invention devised in the light of the above-described problems to provide a flat display device and a display body driving device which are capable of preventing a deterioration of display characteristics due to a DC drive of a display panel, this deterioration being derived from an abnormality of a signal supplied from a display control unit to a display body module unit.

### Disclosure of the Invention:

In a first aspect, this invention provides a flat display device comprising:
a flat display body module unit including a flat display body and display body driving means for driving said flat display body; and
a display control unit for controlling said flat display body module unit and physically distinct and disposed separately therefrom, said flat display body driving means further comprising a signal management control means having a signal detection means for detecting an occurrence of abnormality in a first signal transferred from said display control unit and a sequence processing means for changing a signal form on the side of said flat display body module unit on the basis of said detection signal.

In a second aspect, this invention provides a display body driving device for use on the side of a flat display body module unit in a flat display device comprising a physically distinct and separately disposed flat body module unit and display control unit, for supplying display body driving voltages to a flat display body on the basis of a variety of signals from the display control unit, said driving device comprising:
a signal detection means for detecting an occurrence of abnormality of a first signal transferred from the side of said display control unit; and
a sequence processing means for changing a signal mode on the side of said flat display body module unit on the basis of a detection output thereof.

Generally in a flat display device wherein a display body module unit and a display control unit for controlling the display thereof are separately disposed, the display body module unit performs passive operations while following up control signals given from the display control unit. The present invention, however, adopts an autonomous signal system including a signal management control means. All the components of the signal management control means can be provided on the side of the display body module unit. Those components may, however, be disposed distributively on the side of the display body module unit and in the display control unit.

Such a signal management control means consists of a signal detection means for detecting an occurrence of abnormality of a first signal transferred from the display control unit and a sequence processing means for changing a signal mode on the side of the display body module unit on the basis of the output thereof. The signal abnormality implies a stop of signal, a shrinkage in logic amplitude and an interference. A typical example may be the signal stop. A liquid crystal display device and a plasma display device may be exemplified as a flat display device. The signal detection means is composed concretely of a signal stop detection means for detecting a stop of a first signal. The sequence processing means is a forced stop control means for control-setting, to zero, a display body application voltage supplied to a display panel body of a display body driving means on the basis of the output thereof. When the first signal is stopped on the side of the display body module, this stop is detected by the signal stop detection means. The display body driving means is thereby controlled by the forced stop control means. The driving means sets the display body application voltage to zero. Hence, even when stopping the first signal such as a clock or the like, the DC drive of the display body of the liquid crystal is avoided, thereby preventing a deterioration of the display characteristics.

The following is an adoptable arrangement of the concrete forced stop control means. The forced stop control means includes a first signal delay means for delaying a second signal transferred from the display control unit on occurrence of an output of the signal stop detection means. Display on/off of the display body driving means is controlled based on the output thereof. With such an arrangement, as a matter of course, the display on the liquid crystal panel can be quickly set in an off-state upon generating the detection signal. When the first signal resumes, however, the action is not that the display-on state is restarted at that moment but that the display body driving means is control-set in a display-on state after a time predetermined based on a cycle of the second signal has elapsed. Such a display body driving means control method in terms of time difference is capable of preventing an abnormal drive due to an abnormality of the power source, the abnormality being induced from a rush current. This control method is also capable of reducing a power source load and simplifying a power source circuit. The signal delay means receives a frame start signal as a second signal and is desirably N-staged D-type flip-flops settable and resettable based on an output of the detection means. A delay time in such a case is determined on the unit of frame period. Another adoptable arrangement is that a plurality of signal management control means are disposed on the side of the liquid crystal module. In this case, it is possible to simultaneously detect plural kinds of signals. The forced stop control means is provided with a third signal control terminal for controlling the output thereof, whereby the plurality of signal management control means can be cascade-connected. In such a case, when any detected signal is stopped, display-off with respect to the display body driving means is controllable.

In order to further prevent a deterioration of the display body due to the abnormal drive attributed to the rush current, it is desirable that the display body module be provided with a power source control means for controlling power on/off of a display body power source means for generating display body driving voltages. This power source control means controls power on/off of the display body power source means, corresponding to an output of the detection means. By this control process, after confirming an appearance of the first signal on the side of the display body module unit, the display body power source means is powered on. The following is an adoptable construction of the concrete power source control means. The power source control means includes a second signal delay means for delaying the second signal transferred from the display control unit by the output of the detection means. Based on the output thereof, power on/off of the display body power source means is controlled. With this arrangement, the output of the first signal is confirmed, and, after the time predetermined based on the cycle of the second signal has passed, the display body driving means is energized. For this reason, the power source control means receives an input of a display on/off signal as a second signal. Where the power source control means is M-staged (< N) D-type flip-flops which are set/reset by an output of the detection means, after energizing the display body power source means, the display body driving means is put into a display-on state. This also contributes a reduction in the rush current. However, M and N are positive integers.

The signal management control means relative to the above-described construction is provided on a glass substrate on the side of the display body module unit. The signal management control means can be incorporated into a circuit of the display body driving device which is packaged on the side of the display body module unit. Namely, a display body driving means incorporating a signal management control function can be actualized. The conventional display body driving means is configured in the form of drivers LSI. The foregoing display body driving means with the signal management control function can be constructed as a semiconductor integrated circuit. Y drivers LSI among the drivers LSI are smaller in the number of I/O wires than X drivers LSI. Taking this fact into consideration, it is advantageous that the Y drivers are employed as the drivers LSI with the signal management control function. The liquid crystal display devices are classified roughly into a simple matrix type and an active matrix type. The drivers LSI with the signal management control function are desirably scan drivers or gate drivers.

### Brief Description of the Drawings:

FIG. 1 is a block diagram illustrating a whole configuration of a liquid crystal display device in an embodiment 1 of this embodiment;
FIG. 2 is a circuit diagram showing constructions of respective scan drivers and connective relations between drivers in the same embodiment;
FIG. 3 is a circuit diagram illustrating scan electrode driving cells of the scan driver in the same embodiment;
FIG 4 is a timing chart, showing relations between a variety of signals in a liquid crystal display body module unit, of assistance in explaining the operation of the same embodiment;
FIG. 5 is a block diagram depicting a whole configuration of the liquid crystal display device in a embodiment 2 of this invention;
FIG. 6 is a circuit diagram showing constructions of the signal management control units of the respective scan drivers and connective relations between the drivers in the same embodiment;
FIG. 7 is a circuit diagram illustrating a construction of a liquid crystal power source circuit in the same embodiment;
FIG. 8 is a timing chart, showing relations of a variety of signals in the liquid crystal display body module unit, of assistance in explaining the operation of the same embodiment; and
FIG. 9 is a block diagram depicting a configuration of a conventional liquid crystal display device.

### Best Mode for Carrying out the Invention:

Embodiments of the present invention will hereinafter be described with reference to the accompanying drawings.

### (Embodiment 1)

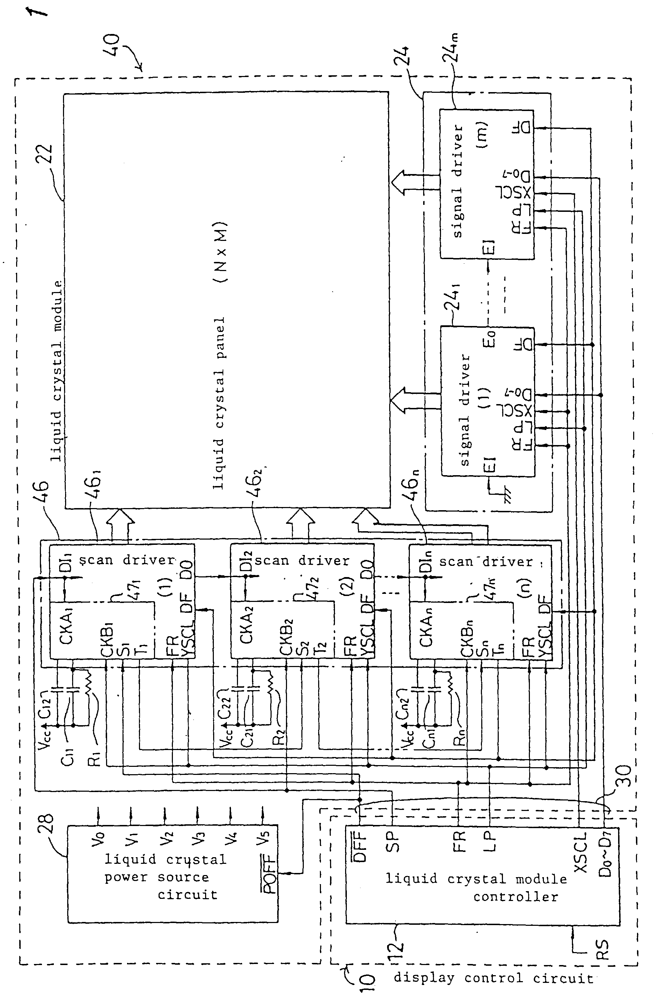

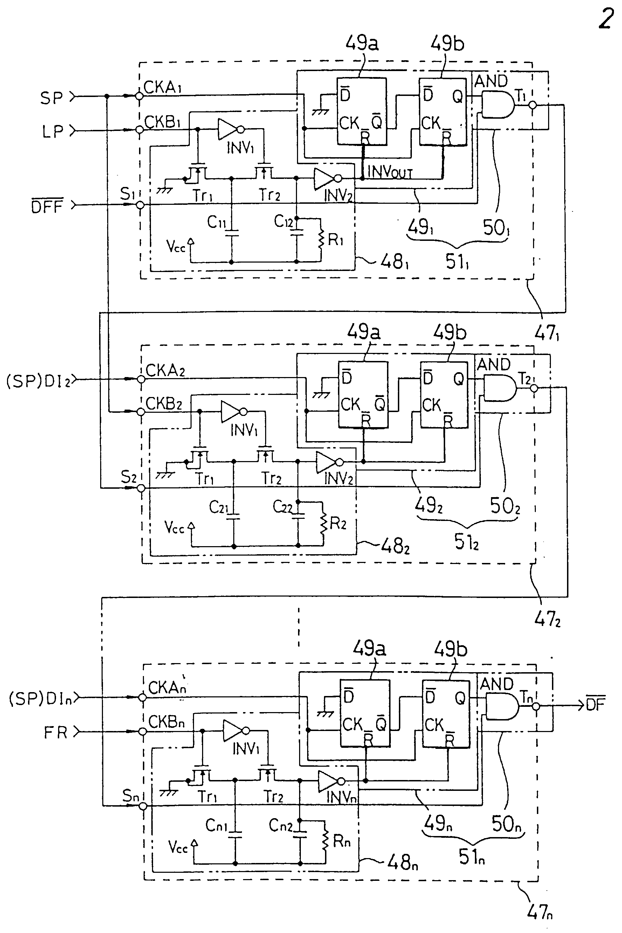

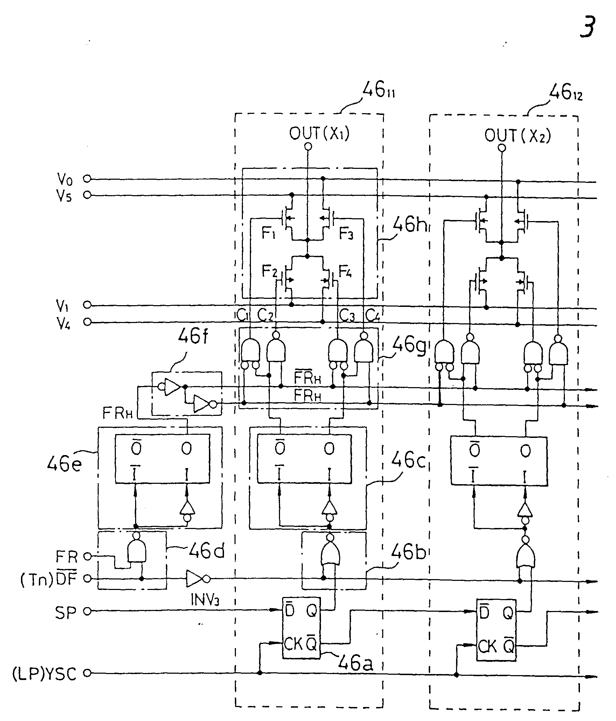

FIG. 1 is a block diagram illustrating a whole configuration of a liquid crystal display device in an embodiment 1 of this invention. Note that in FIG. 1, the same components as those of FIG. 9 are marked with the like reference symbols, and the description thereof will be omitted.

Signal management control units 47 are incorporated into scan driver semiconductor integrated circuits (LSI) 46₁ - 46n combined to constitute a scan electrode driving circuit (Y drivers) of a liquid crystal display module unit 40 in this embodiment. A signal management control unit 47₁ of the first scan driver semiconductor integrated circuit 46₁ detects a stop of a scanning line synchronous signal YSCL (data signal latch clock LP) applied to a terminal CKB1. The signal management control unit 47₂ of the second scan driver semiconductor integrated circuit 46₂ detects a stop of a scan start pulse (frame start signal) SP applied to a terminal CKB2. A signal management control unit 47n of the n-th (e.g., third) scan driver semiconductor integrated circuit 46n detects a stop of an AC-transforming clock FR applied to a terminal CKBn. The respective signal management control units 47₁ - 47n have signal stop detection control terminals S₁ - Sn and signal stop detection terminals T₁ - Tn. A forced blank display signal $\overline{\text{DFF}}$ of a high level voltage is normally supplied from the control circuit 10 to the signal stop detection control terminal S₁ of the signal management control unit 47₁ of the first scan driver semiconductor integrated circuit 46₁. The signal stop detection terminal T₁ is connected to the signal stop detection control terminal S₂ of the signal management control unit 47₂ of the second scan driver semiconductor integrated circuit 46₂. The signal stop detection terminal T₂ of the signal management control unit 47₂ of the second scan driver semiconductor integrated circuit 46₂ is connected to a signal stop detection terminal (e.g., the signal stop detection control terminal Sn of the n-th signal management control unit 47n) of the next stage. The signal stop detection terminal Tn of the n-th signal management control unit 47n is connected to forced blank control terminals $\overline{\text{DF}}$ of the scan drivers 46₁ - 46n and the signal drivers 24₁ - 24n.

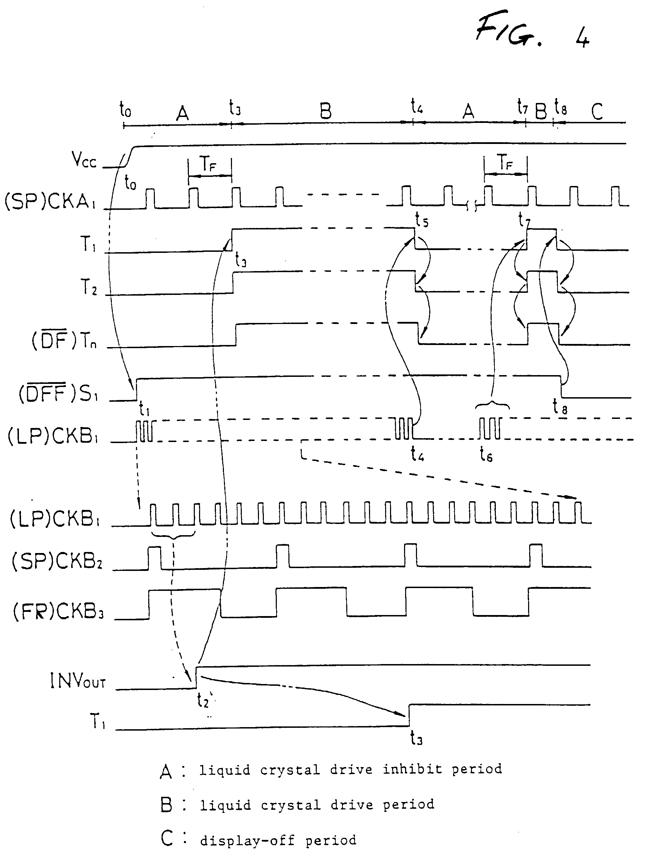

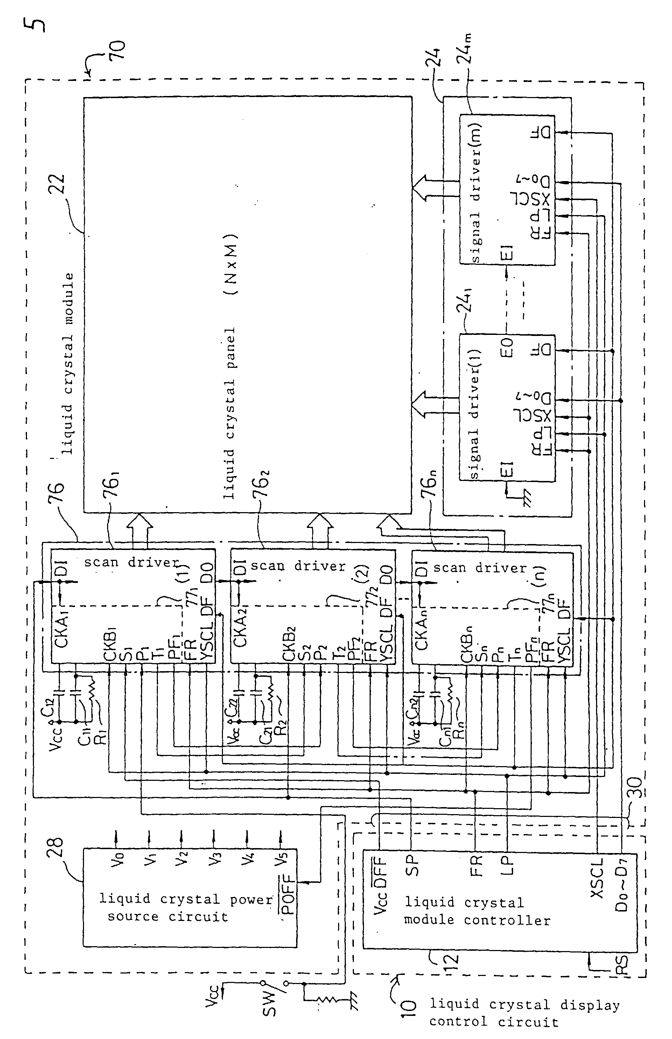

The signal management control units 47₁ - 47n of the respective scan drivers are, as illustrated in FIG. 2, cascade-connected. Configurations of the signal management control units 47₁ - 47n are the same. A detected signal of the signal management control unit 47₁ is a data signal latch clock LP applied to the terminal CKB₁. A detected signal of the signal management control unit 47₂ is a scan start pulse (frame start signal) SP applied to the terminal CKB₂. A detected signal of the signal management control unit 47n is an AC-transforming clock FR applied to the terminal CKBn.

Now, an emphasis is placed on the signal management control unit 47₁, and the construction thereof will be explained. The signal management control unit 47₁ includes a signal stop detection circuit 48 serving as a signal detection means for detecting a stop of the detected signal and a sequence processing circuit 51 consisting of a signal delay circuit 49 and a logic circuit 50.

The signal stop detection circuit 48 is composed of: a first N-type MOS transistor Tr₁ switched by a latch clock LP conceived as a detected signal and constituting a transfer gate; an inverter INV₁ for inverting a phase of the latch clock LP; a second N-type MOS transistor Tr₂ switched by an antiphase signal of the latch clock LP and constituting a transfer gate; a first capacitor C₁₁ for effecting a charge and discharge in accordance with opening/closing operations of the first N-type MOS transistor Tr₁; a second capacitor C₁₂ for effecting the charge and discharge in accordance with the opening/closing operations of the second N-type MOS transistor Tr₂; a discharge resistor R₁ for discharging an electric charge of the capacitor C₁₂; and an inverter INV₂ for outputting a charge level judgment signal by comparing a charge voltage of the second capacitor C₁₂ with a threshold value V_{TH}. The first N-type MOS transistor Tr₁, the inverter INV₁ and the second N-type MOS transistor Tr₂ are combined to constitute a series exclusive keying circuit. The first N-type MOS constitutes a selective charge switch for the first capacitor C₁₁. The second N-type MOS transistor Tr₂ constitutes a selective charge switch for distributively transferring a charge of the first capacitor C₁₁ to a second capacitor C₁₂.

The signal delay circuit 49 consists of: a D-type flip-flop 49a, in which the frame start signal SP serves as a clock input CK, including a reset terminal R connected to an output of the inverter INV₂ and an input terminal D earthed; and a D-type flip-flop 49b, in which the frame start signal SP serves as a clock input, including a reset terminal R connected to the output of the inverter INV₂ and an input terminal D connected to an output Q of the flip-flop 49a. The logic circuit 50 is constructed of an AND circuit AND which receives two inputs of the forced blank signal $\overline{\text{DFF}}$ from the control circuit 10 and an output Q of a flip-flop 49b.

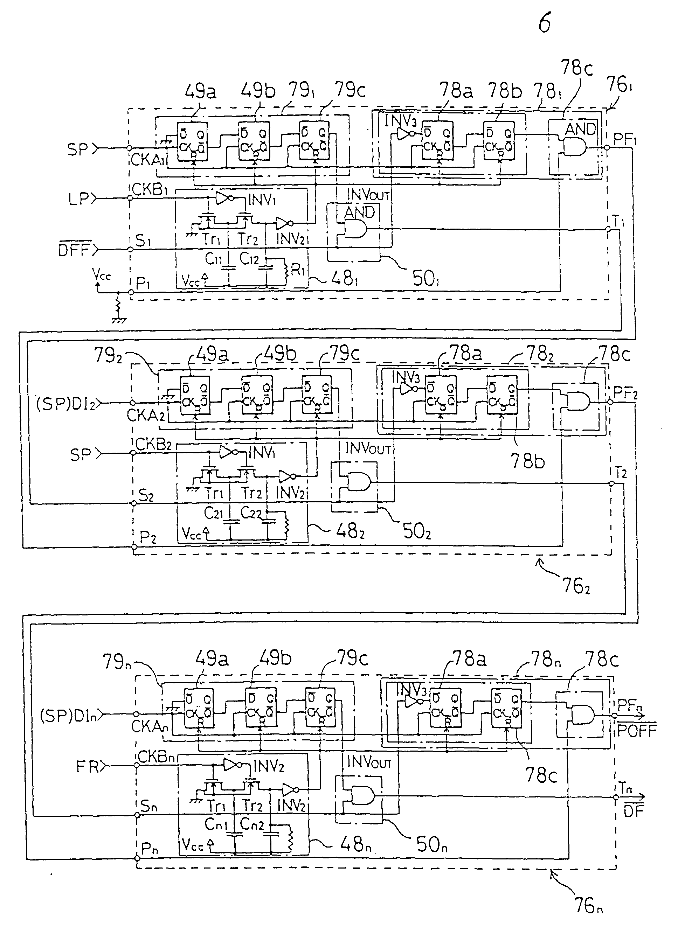

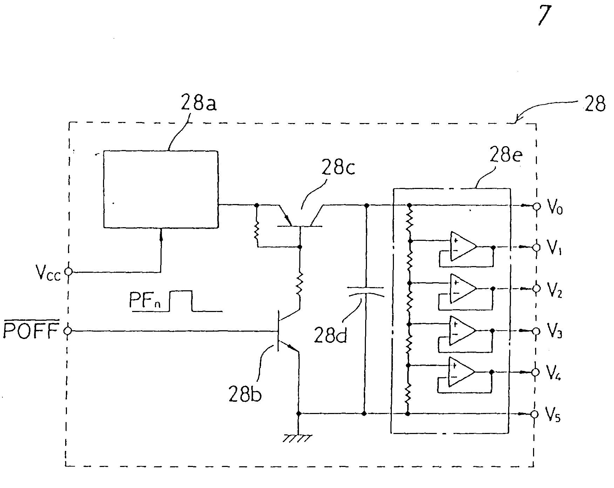

FIG. 3 is a circuit diagram illustrating a typical scan electrode driving circuit (logic unit) other than the signal management control unit 47₁ of the scan driver 46₁. Formed in array in this logic unit are multi-bit scan electrode driving cells 46₁₁, 46₁₂... for applying voltages in the order of lines corresponding to a multiplicity of scan electrodes. Turning to FIG. 3, there are illustrated the scan electrode driving cells 46₁₁, 46₁₂ of the first and second bits and peripheral circuits thereof.

Attention is herein paid on the scan electrode driving cell 46₁₁, and its configuration will be explained. This scan electrode driving cell 46₁₁ consists of: a D-type flip-flop 46a, in a shift register, started by the frame start signal SP and transferring this frame start signal SP to the next stage every time a scan synchronous signal YSCL comes; a line unit forced blank display control circuit 46b for performing a logic arithmetic operation by adding, to its bit selection output Q, a forced blank display signal $\overline{\text{DF}}$ supplied from the terminal Tn of the n-th scan driver 46n; a line unit voltage level shift circuit 46c for converting an output thereof into a high voltage system logic amplitude from a logic system power source voltage (Vcc = 5v); a total line forced blank display control circuit 46d for performing a logic arithmetic operation by adding the forced blank display signal $\overline{\text{DF}}$ to the AC-transforming clock FR; an AC-transforming clock voltage level shift circuit 46e for converting the AC-transforming clock FR into a high voltage AC-transforming clock $\overline{\text{FR}}$_{H} having a high voltage system logic amplitude from the logic system power source voltage (Vcc = 5v); a positive/opposite 2-phase clock generation circuit 46f for inverting the high voltage AC-transforming clock $\overline{\text{FR}}$_{H} thereof to an antiphase high voltage AC-transforming clock FR_{H}; a selection control signal generation circuit 46g for generating four pieces of selection control signals C₁ - C₄ in chained combinations from a pair of the high voltage AC-transforming clock $\overline{\text{FR}}$_{H} and the antiphase high voltage AC-transforming clock FR_{H} and a pair of outputs 0, 0 of the line unit voltage level shift circuit 46c; and a selection switch 46h for alternatively convey-supplying scan electrode driving voltages V₅, V₁, V₀, V₄ to the scan electrodes in response to respective selection control signals C₁, C₂, C₃, C₄. A forced blank display control circuit is herein composed of the line unit forced blank display control circuit 46b and the total line blank display control circuit 46d. Note that the symbol INV₃ represents an inverter for matching a logic with respect to the line unit forced blank display control circuit 46b of the forced blank display control signal $\overline{\text{DF}}$.

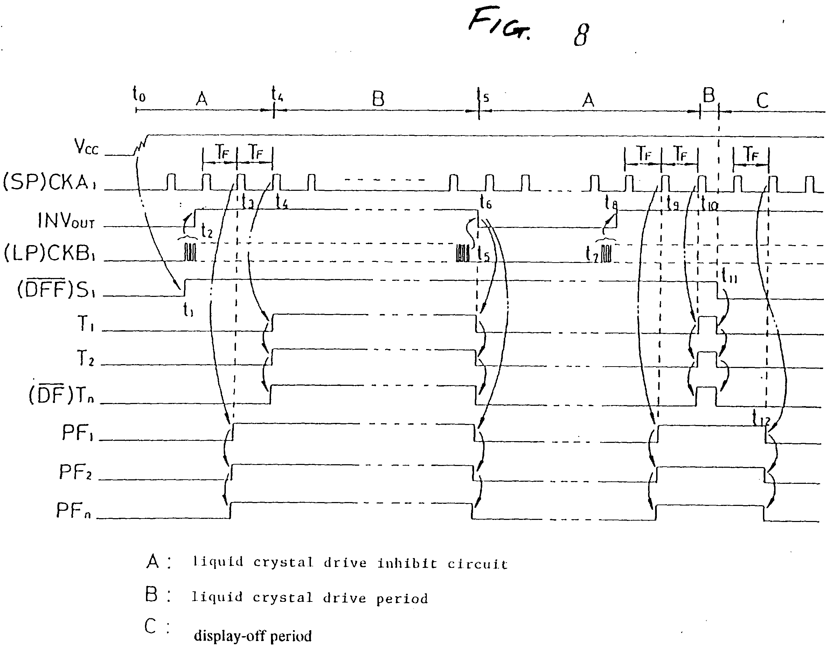

Next, the operation of this embodiment will be explained with reference to FIG. 4, too. When turning on a logic power source Vcc of the liquid crystal display device at a timing to, a reset signal having a pulse width of several µs - several ms is supplied to a power-on reset terminal RS of a liquid crystal module controller 12 from an MPU (not illustrated) in the same manner with the prior art. The liquid crystal module controller 12 is thereby initialized. During this initialization, a variety of signals outputted from the liquid crystal module controller 12 are generally in a stopping status. During this period, the forced blank display signal $\overline{\text{DFF}}$ assumes a low voltage level (hereinafter referred to as an L level). Hence, a liquid crystal power source circuit 28 is in a power-off state, while the liquid crystal driving power source voltages V₀ - V₅ remain in a non-generated state. Therefore, during this initialization, no DC component is applied between the liquid crystal electrodes, and a deterioration in liquid crystal elements is prevented.

After this period, as illustrated in FIG. 4, the forced blank display signal $\overline{\text{DFF}}$ changes from the L level to a high voltage level (hereinafter referred to as an H level) at a timing t₁. The liquid crystal module controller 12 generates the frame start signal SP, the data signal latch clock LP and the AC-transforming clock FR. Now, the operation of the signal management control unit 47₁ of the scan driver 46₁ will be at first described. The frame start signal SP is supplied to an input terminal CKA₁ of the signal delay circuit 49. The data latch clock LP is supplied to a detection terminal CKB₁ of the signal stop detection circuit 48.

During an H-level period of the data signal latch clock LP, the transistor Tr₁ of the signal stop detection circuit 48 assumes an on-status, whereas the transistor Tr2 assumes an off-status. Hence, the capacitor C₁₁ is charged with electricity for this period. During an L-level period of the data signal latch clock LP, the transistor Tr₂ of the signal stop detection circuit 48 is in the on-status, whereas the transistor Tr₁ is in the off-status. Therefore, a part of electric charge supplied to the capacitor C₁₁ is transfer-fed to a capacitor C₁₂. A charging voltage of the capacitor C₁₂ increases with a generation of repetitive pulses of the data signal latch clocks LP. An input voltage of the inverter INV₂ comes to the threshold value V_{TH} or under. An output INV_{OUT} of the inverter INV₂ assumes the H level at a timing t₂. Before the timing t₂, the output INV_{OUT} of the inverter INV₂ assumes the L level. Therefore, the output Q of the D-type flip-flop 49a of the signal delay circuit 49 is at the L level. For this reason, an output T₁ of the logic circuit 50 assumes the L level. Even when the output INV_{OUT} becomes the H level at that moment, the output Q does not assume the H level at the timing t₂. During a 1-frame period (T_{F)} and a 2-frame period (2T_{F)} of the frame start signal SP, the output Q is kept at the L level due to delayed storage action of the input signals of the D-type flip-flops 49b, 49a. At a timing t₃, the output T₁ of the logic circuit 50 assumes the H level.

The frame start signal SP is supplied to the detection terminal CKB₂ of the signal stop detection circuit 48₂ of the signal management control unit 47₂. Supplied to an input terminal CKA₂ of the signal delay circuit 49₂ is the frame start signal SP defined as a cascade input DI₂ coming from a cascade output terminal DO of the scan driver 46₁. The output T₁ of the logic circuit 50 of the scan driver 46₁ is cascade-connected to the logic circuit 50 of the scan driver 46₂. A capacitor C₂₁ of the signal stop detection circuit 48₂ is fed with an electric energy by repetitive pulses of the frame start signals SP. Similarly, the AC-transforming signal FR is supplied to a detection terminal CKBn of the signal stop detection circuit 48n of the signal management control unit 47n in the scan driver 46n. Supplied to an input terminal CKAn of the signal delay circuit 49n is the frame start signal SP defined as a cascade input DIn coming from the output terminal DO of the scan driver 46₂. The output T₂ of the logic circuit 50 of the scan driver 46₂ is cascade-connected to the logic circuit 50 of the scan driver 46n. A capacitor Cn2 of the signal stop detection circuit 48n is charged with the electricity by the repetitive pulses of the AC-transforming signals FR. Periods and duty ratios of the data signal latch clock LP conceived as a detected signal, the frame start signal SP and the AC-transforming signal FR are different. For making coincident the comparative judgment timings t3 of the inverters INV₁ - INVn in the respective scan drivers, it is desirable that values (time constants) of discharge resistances R₁ - Rn and of the capacitors C₁₁ - Cn1, C₁₂ - Cn2 be mutually adjustable. For this purpose, in this embodiment, as illustrated in FIG. 1, the scan driver is provided with connection external terminals of the resistances and the externally attached capacitors.

As described above, during a period from the on-timing to of the logic power source Vcc to the timing t₃ when the outputs T₁ - Tn of the logic circuit assume the H level, the L level outputs Tn are supplied to the forced display blank control terminals $\overline{\text{DF}}$ of the signal drivers and the scan drivers. A liquid crystal display panel 22 is therefore in a blank display state. More specifically, when the forced display blank control signal $\overline{\text{DF}}$ is at the L level, only a transistor F₁ of the selection switch 46h of the scan electrode driving cell 46 remains in an on-state under control of the forced blank display control circuits 46b, 46d depicted in FIG. 3. A voltage of V₅ (0v) is impressed on the scan electrodes, while an inter liquid crystal electrode voltage (liquid crystal applying voltage) is 0v. A period from the timing t₀ to the timing t₃ corresponds to a liquid crystal drive inhibit period. At the timing t₁, the liquid crystal power source circuit 28 is powered on, whereby the liquid crystal voltages V₀ - V₅ are generated. Those voltages are supplied to the scan and signal drivers. At a power source actuation timing, the shift registers in the scan and signal drivers are in an unsteady state. The liquid crystal display continues to be blank-controlled up to the timing t₃, however, it is therefore possible to avoid abnormal driving of the liquid crystal panel.

Next, when the output Tn becomes the H level at the timing t₃, H-level voltages are supplied to the forced display blank control terminals $\overline{\text{DF}}$ of the scan and signal drivers. The liquid crystal display panel 22 is thereby AC-driven by normal operations of the scan and signal drivers. A display picture is depicted on the liquid crystal panel 22. The symbol B of FIG. 4 indicates a liquid crystal driving period. The liquid crystal power source circuit 28 and the logic units of the scan and signal drivers are powered on at the timing t₁. At the timing t₃ later than that timing, the liquid crystal display panel 22 is driven. Therefore, since the power-on of the power source does not take place simultaneously, an excessive power source rush current is restrained. It is because, in addition to delayed action of the signal stop detection circuit 48 itself, the delayed action of the signal delay circuit 49 having a delay time of 1 - 2 frame period functions effectively.

Now, it is presumed that an output of the data signal latch clock LP transmitted from the liquid crystal module controller 12 is stopped at a timing t₄ in the liquid crystal driving period B. During outputting of the data signal latch clock LP, the sufficient electric energy is supplied to the second capacitor C₁₂ of the signal detection circuit 48₁ of the scan driver 46₁. When the clock thereof is stopped, no electric charge is transferred to the second capacitor C₁₂ from the first capacitor C₁₁. Besides, the electric charge of the second capacitor C₁₂ is quickly discharged at a predetermined time constant via the discharge resistance R₁. An input voltage of the inverter INV₂ is gradually boosted. If that input voltage exceeds the threshold value V_{TH}, the output voltage INV_{OUT} thereof assumes the L level at a timing t₅. With this logic variation, the signal delay circuit 49₁ is reset, and the output Q thereof becomes the L level. Hence, in spite of the fact that the forced display blank control signal $\overline{\text{DF}}$ is at the L level, the output T₁ of the logic circuit 50₁ assumes the L level at the timing t₅. This output T₁ is cascade-inputted to the logic circuit 50₂ of the scan driver 46₂. Even when the frame start signal SP is being outputted, and output T₂ of the logic circuit 50₂ becomes the L level. Further, the output T₂ is cascade-inputted to the logic circuit 50n of the scan driver 46n. Therefore, the output Tn of the logic circuit 50n assumes the L level even when the AC-transforming signal Fr is being outputted. The output Tn thereof corresponds to the forced display blank control signal $\overline{\text{DF}}$ on the side of the liquid crystal display module unit 46. The liquid crystal panel 22 is thereby brought into a blank display state by using the forced display blank circuits 46b, 46d. Namely, only a transistor F₁ of the selection switch 46h of the scan electrode driving cell 46 shown in FIG. 3 is in the on-state. A voltage V₅ (0v) is fed to the scan electrodes, and the inter liquid crystal electrode voltage is thereby kept at 0v. For this reason, even if the data signal latch clock LP is stopped due to some cause, the liquid crystal elements are not driven by the DC components, thereby preventing a deterioration of the liquid crystal beforehand. If the frame start signal SP or the AC-transforming signal FR is stopped due to some cause, the output Tn becomes the L level. Similarly, the deterioration of the liquid crystal is prevented beforehand. Incidentally, during this liquid crystal drive inhibit period A, so far as the frame start signal SP and the AC-transforming signal FR continue, the second capacitor C₂₂ and the capacitor Cn1 are in a charged state; and the outputs of the inverters INV_{2,} ,INVn assume the H level.

When the data signal latch clock LP begins to reappear at a timing t₆, as described above, the second capacitor C₁₂ is charged with the electricity. The output INV_{OUT} of the inverter INV₁ then becomes the H level. After 1 - 2 frame periods from the timing when the output INV_{OUT} has become the H level, the output Q of the signal delay circuit 49₁ functioning as a timer assumes the H level at a timing t₇. The output T₁ of the logic circuit 50₁ thereby becomes the H level, and correspondingly the outputs T_{2,} Tn of the logic circuits 50₂, 50n become the H level. Hence, the forced blank control signal $\overline{\text{DF}}$ on the part of the liquid crystal module unit 22 is changed to the H level, whereby the liquid crystal display panel 22 enters the liquid crystal driving period B.

Finally, when the forced display blank control signal $\overline{\text{DFF}}$ on the part of the liquid crystal display controller 12 assumes the L level at a timing t₈, the output T₁ of the logic circuit 50₁ is changed to the L level. The outputs T₂, Tn of the logic circuits 50₂, 50n thereby become the L level. Therefore, the forced display blank control signal $\overline{\text{DF}}$ on the side of the liquid crystal display module unit 20 becomes the L level. The liquid crystal display panel 22 enters a display-off period C.

### (Embodiment 2)

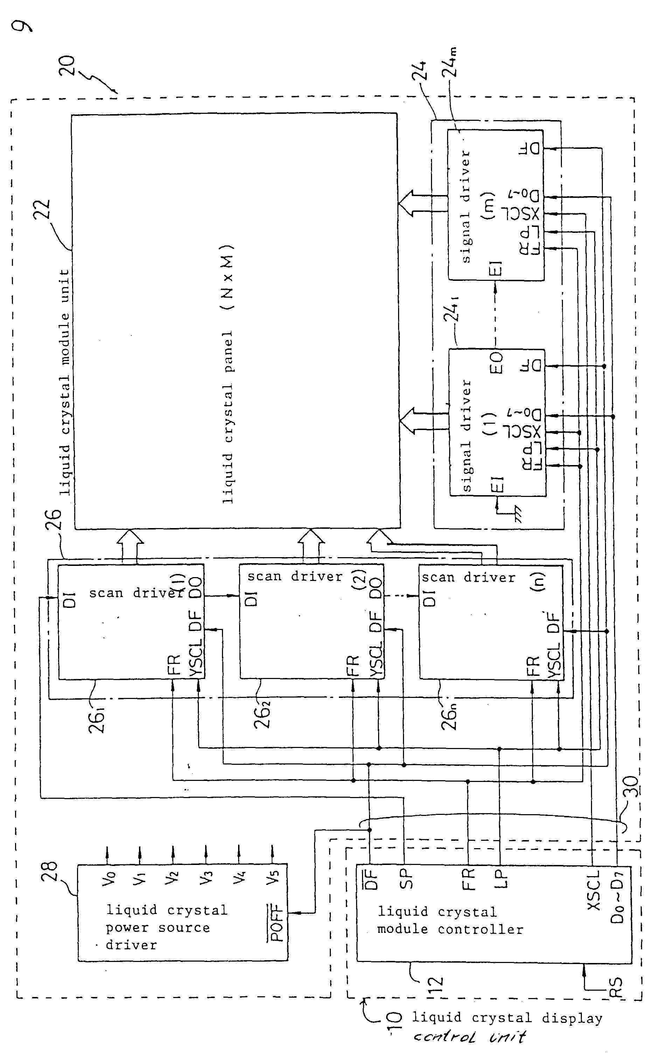

FIG. 5 is a block diagram illustrating the liquid crystal display device in an embodiment 2 of this invention. Note that in FIG. 5, the same components as those of FIG. 1 are marked with the like reference symbols, and the description thereof will be omitted.

A scan electrode driving circuit 76 (X drivers) of a liquid crystal display module unit 70 is composed of a plurality of scan drivers 76₁ - 76n. These scan drivers include signal management control units 77₁ - 77n identical with the signal management control units of the embodiment 1. Added to the respective signal management control unit 77₁ - 77n, as illustrated in FIG. 6, are power source power on/off control circuits 78₁ - 78n for controlling power on/off timings of the liquid crystal power source circuit 28 for generating the liquid crystal driving voltages V₀ - V₅. Each of the power source power on/off control circuits 78₁ - 78n is constructed of: an inverter INV₃ for inverting signals coming in input terminals S₁ - Sn of the logic circuit 50₁; 2-stage-connected D-type flip-flops 78a, 78b; and a logic circuit 78c for taking logic with respect to the signals coming from terminals P₁ - Pn and the output Q. A signal delay circuit 79 of each signal management control unit 77 is constructed in such a way that a D-type flip-flop 79c of the third stage is additionally connected to the 2-stage-connected D-type flip-flops 49a, 49b of the signal delay circuit 49 in the embodiment 1. A power on/off signal of the power source voltage Vcc on the logic side is supplied to an input terminal P₁ of a logic circuit 78c of the first scan driver 76₁. An output PF₁ of the power source power on/off control circuit 78₁ in the first scan driver 76₁ is cascade-supplied to a terminal P₂ of the second scan driver 76₂. Cascade-supplied to a terminal Pn of the n-th scan driver 76n is an output PF₂ of the power source power on/off control circuit 78₂ in the second scan driver 76₂ of the previous stage. An output PFn of the power source power on/off control circuit 798n of the n-th scan driver 76n is supplied to a power-off terminal $\overline{\text{POFF}}$ of the liquid crystal power source circuit 28.

The liquid crystal power source circuit 28 is structured in the same way with the conventional example. This circuit, as depicted in FIG. 7, includes: a voltage transforming circuit 28a for generating a high voltage (20 - 40v) which is boosted based on the Vcc (5v) power source voltage; an npn-type transistor 28b for effecting on/off control depending on a value of the voltage supplied to the power-off terminal $\overline{\text{POFF}}$; a pnp-type transistor 28c of a power switch for performing on/off operations interlocking with on/off operations of the transistor 28b; a smoothing capacitor 28d interposed between a collector thereof and the earth; and a voltage dividing circuit 28e for outputting the liquid crystal driving voltages V₀ - V₅ from the charge voltage thereof.

The operation of the foregoing embodiment will next be explained with reference to FIG. 8. A power switch SW is closed at a timing t₀. The logic power source Vcc of the liquid crystal display device is turned on. As in the same way with the embodiment 1, a reset signal having a pulse width of several µs - several ms is supplied from an MPU to a power-on reset terminal RS of the liquid crystal module controller 12. The liquid crystal module controller 12 is thereby initialized. Hence, an output signal from the liquid crystal module controller 12 is generally in a stopping status. During such a period, the logic power source voltage Vcc is supplied to one input of the logic circuit 78c defined as an AND circuit of the first scan driver 76₁. The data signal latch clock LP does not yet, however, come out, and hence its output PF₁ assumes the L level. As a result, an output PF₂ of the second scan driver 76₂ is also at the L level. Besides, an output PFn of the n-th scan driver 76n becomes also the L level, whereby a power-off terminal $\overline{\text{POFF}}$ of the liquid crystal power source circuit 28 is kept at the L level. For this reason, a base potential of the transistor 28b shown in FIG. 7 assumes an L level (0v), so that a boosted voltage is not supplied to the smoothing capacitor 28d. Therefore, the liquid crystal driving voltages V₀ - V₅ are not generated. As is similar to the embodiment 1, no DC component is applied between the liquid crystal electrodes during this initializing period. A deterioration of the liquid crystal elements is prevented.

Next, as illustrated in FIG. 8, a variety of signals are generated from the liquid crystal module controller 12 at a timing t₁. The forced blank display signal $\overline{\text{DFF}}$ is changed from the L level to the H level. Generated are the frame start signal SP, the data signal latch clock LP and the AC-transforming clock FR. As explained in the embodiment 1, upon a start of appearance of the data signal latch clock LP, the output INV_{OUT} of the inverter INV₂ assumes the H level at a timing t₂. For this reason, the output Q of the power on/off control circuit 78b becomes the H level at a timing t₃ which is later by a 1 - 2 frame period than the timing t₂. The output PF1 of the logic circuit 78c therefore becomes the H level. The outputs PF₂, PFn of the logic circuits 78c of the second and n-th scan drivers 76₂, 76n become the H level, correspondingly. The power-off terminal POFF of the liquid crystal power source circuit 28 is energized at the H level. In consequence of this, the transistor 28b is put into an on-state. The transistor 28c is also brought into the on-s-tate because of a drop in voltage of an inter base/emitter resistance of the transistor 28c. The smoothing capacitor 28d is charged with the electricity, thereby generating the liquid crystal driving voltages V₀ - V₅. During a period from the timing t₃ to a timing t₄ when the next frame start signal SP comes, the output Q of the D-type flip-flop 79c remains at the L level. The stage number of the D-type flip-flops of the signal delay circuit 79₁ in this embodiment is greater by 1 than in the power on/off control circuit 78₁. The output Q of the D-type flip-flop 79c becomes the H level slower by a 1-frame period T_{F} than that of the D-type flip-flop 78b. As a result, the outputs T₁, T₂, Tn all become the H level. As in the same way with the embodiment 1, the forced blank display signal $\overline{\text{DF}}$ on the part of the liquid crystal module unit is changed from the L level to the H level. The driving voltages V₀ - V₅ are thereby supplied to the scan and signal electrodes of the liquid crystal display panel 22. The operation then enters a liquid crystal mode.

For instance, concurrently with a generation of the liquid crystal driving voltages V₀ - V₅, the liquid crystal display panel 22 is driven. It follows that large charge rush currents are induced in power source units of the scan and signal drivers as well as in the liquid crystal panel. In accordance with this embodiment, however, the liquid crystal drive is initiated after the 1-frame period T_{F} since the liquid crystal driving voltages V₀ - V₅ have been generated at the timing t₃. The power source units are energized with a time difference, whereby the rush currents can be dispersed. This makes it possible to prevent a power-down and reduce a power capacity, which is in turn helpful for protecting the liquid crystal display panel and the drivers as well. The above-described power control decreases a burden in terms of system development costs and restrains an increase in the number of signal wires between the conventional system and LCD module. Furthermore, a reduction in the power capacity is brought about, and hence inexpensive power source is available.

Next, supposing that oscillations of the data signal latch clocks LP transmitted from the liquid crystal module controller 12 are stopped at the timing t₅ in the liquid crystal driving period B, as in the embodiment 1, the input voltage of the inverter INV₂ is boosted. The output voltage INV_{OUT} becomes the L level at a timing t₆. The outputs T₁, T₂, Tn also become the L level. As a result, the forced display blank control signal $\overline{\text{DF}}$ on the side of the liquid crystal display module unit assumes the L level. The liquid crystal display panel 22 is thereby put into a blank display state. The effects as those of the embodiment 1 are exhibited. When the output voltage INV_{OUT} of the inverter INV₂ assumes the L level, the outputs PF₁, PF₂, PFn simultaneously become the L level. The power-off terminal $\overline{\text{POFF}}$ of the liquid crystal power source circuit 28 is changed to the L level. The liquid crystal driving voltages V₀ - V₅ cease to be generated.

The data signal latch clock LP starts reappearing at a timing t₇. As in the same way with the embodiment 1, the output voltage INV_{OUT} of the inverter INV₂ becomes the H level at a timing t₈. As discussed above, the outputs PF₁, PF₂, PFn also become the H level at a timing t₉ after the 1 - 2 frame period from that timing t₈. In consequence of this, the power-off terminal $\overline{\text{POFF}}$ of the liquid crystal power source circuit 28 is changed to the H level. Generated are the liquid crystal driving voltages V₀ - V₅ which are in turn applied to the drivers. As explained earlier, the outputs T₁, T₂, Tn become the H level at a timing 10 which is later by the 1-frame period T_{F} than the timing t₉. The liquid crystal driving voltages V₀ -V₅ are supplied to the scan and signal electrodes of the liquid crystal display panel 22. Then resumes the liquid crystal display mode.

When the forced display blank control signal DFF on the part of the liquid crystal display controller 12 becomes the L level at a timing t₁₁, the outputs T₁, T₂, Tn also become the L level. The forced display blank control signal $\overline{\text{DF}}$ on the side of the liquid display module unit 70 assumes the L level, correspondingly. The liquid crystal display panel 22 enters a display-off period C. At a timing t₁₂ after the 1 - 2 frame period from that timing t₁₁, the output Q of the D-type flip-flop 78b of the power on/off control circuit 78₁ is changed to the L level. The outputs PF₁, PF₂, PFn also become the L level. As a result, the power-off terminal $\overline{\text{POFF}}$ of the liquid crystal power source circuit 28 also assumes the L level. Then stops the generation of the liquid crystal driving voltages V₀ - V₅. As described above, the forced display blank control signal DF on the side of the liquid crystal display controller 12 becomes the L level, after stopping the liquid crystal drive, and after a constant period has elapsed, no liquid crystal voltage is applied to the drivers. Relations in potential with respect to the logic power source Vcc and the liquid crystal driving voltages V₀ - V₅ are maintained by the sequence during such a power-off period. A through current and a parasitic bipolar current within the driver are restrained, thereby protecting the liquid crystal display panel and the drivers as well.

In accordance with this embodiment, after the clocks have been supplied to the liquid crystal module, the liquid crystal power source circuit 28 is powered on. The liquid crystal power source circuit 28 is powered off when stopping the output of the clocks. The rush currents are eliminated or occur with a time difference by the auto-sequence of such energizing of the power source. As is similar to the above, it is feasible to protect the liquid crystal panel constituting the liquid crystal display module, the drivers and the liquid crystal power source circuit as well.

Incidentally, in the embodiments discussed above, the signal management control units are incorporated into the scan drivers LSI. It is because the number of the I/O signal lines is smaller than that of the signal drivers LSI, and the display frame region is broad. Hence, the area available for the circuit board mounted with the signal management control units is large. This embodiment has dealt with the display device based on the simple matrix liquid crystal panel. The present invention is not limited to this type of display device but may be applied to an active matrix type liquid crystal display device. In such a case, it is desirable that the signal management control units be incorporated into gate drivers LSI. On this occasion, the gate drivers LSI are controlled so that all the gates are turned on when stopping the clocks. Source drivers are controlled to output the same potential on the data side as that on the common side. All the pixel electric fields are set in a non-application state. Besides, the present invention is applicable not only to the displays but also to display devices whose display quality is deteriorated by the DC drive as can be seen in an electronic device and a plasma display to which the liquid crystal device is, as in the case of a liquid crystal photo arithmetic device, widely applied.

In the respective embodiments discussed above, the liquid crystal module incorporates the means for detecting an abnormality in the signal supplied from the liquid crystal module controller 12 and the means for eliminating this abnormal state of the signal beforehand or afterwards. The following distributive arrangement may, however, be adoptable. Some of components of those means are provided in the liquid crystal module, while the rest of them are provided in the system (controller). For example, the plurality of signals (SP, LP, FR) which may cause a DC driver of the liquid crystal panel are different from each other in terms of frequencies and pulse duties. Therefore, those signals are converted into a single composite signal by use of a non-coincidence gate (Exclusive OR gate). The composite signal is sent back to the system, and the abnormal state is checked by a judgment circuit. The abnormal state is eliminated by an output thereof. An additional arrangement is that the indicator display is effected by using a display body other than that on the side of the LCD module. The following is other adoptable method. The output of the terminal Tn of the scan driver 46n in the embodiment of FIG. 1 is returned to the system, and the logic and liquid crystal system power sources are on/off-controlled by fixed procedures (sequence).

Another cause for deteriorating the liquid crystal panel will be elucidated. The deterioration may be caused by the fact that the liquid crystal panel is driven by the effective DC components due to a decay in the output of a specific driver. The deterioration may be caused also by value shifts of the liquid crystal driving voltages V₀ - V₅ which are derived from an abnormality in the voltage dividing circuit 28e of the liquid crystal power source circuit 28 shown in FIG. 7. Those abnormal conditions are detectable as fluctuations in the power source current and voltage and therefore eliminated by the above-described abnormality eliminating means.

### Industrial Applicability:

As discussed above, in the flat display device according to the present invention, when stopping the oscillations of signals transferred from the display control unit, the DC drive of the liquid crystal is forcibly stopped by the signal management control means of the display body module. It is therefore possible to prevent the deterioration in the display body which is derived from the DC drive. Besides, the power source rush currents can be reduced. The present invention is applicable not only to the liquid crystal display device but also to a plasma display device and the like. The present invention is suitable for use with display devices where the display quality and life-span of the display body are unrestorable due to the abnormality in the driving signals.

## Claims

1. A flat display device comprising:
a flat display body module unit (40) including a flat display body (22) and display body driving means (24, 46) for driving said flat display body; and
a display control unit (10) for controlling said flat display body module unit and physically distinct and disposed separately therefrom, said flat display body driving means further comprising a signal management control means (47) having a signal detection means (48) for detecting an occurrence of abnormality in a first signal transferred from said display control unit and a sequence processing means (51) for changing a signal form on the side of said flat display body module unit on the basis of said detection signal.

2. The flat display device as set forth in claim 1, wherein said signal detection means is a signal stop detection means for detecting a stop of said first signal, and said sequence processing means is a forced stop control means for control-setting, to zero, a display body application voltage, supplied to said flat display body, of said display driving means on the basis of an output of said signal stop detection means.

3. The flat display device as set forth in claim 2, wherein said forced stop control means includes a first signal delay means (49) for delaying a second signal in dependence on an output of said signal stop detection means, the second signal being transferred from the side of said display control unit.

4. The flat display device as set forth in claim 3, wherein said forced stop control means includes a control terminal (S) of a third signal, an output transmission of which is to be controlled.

5. The flat display device as set forth in claim 4, further comprising n-pieces of signal management control means (47₁ - 47ₙ) where n is a positive integer, and types of detected signals inputted as said first signals to said respective signal management control means are different from each other.

6. The flat display device as set forth in claim 5, wherein a control output of a k-th signal management control means is a third signal of a (k + 1)th signal management control means where k = 1, ..., n - 1, n is a positive integer greater than 2, and display on/off of said display body driving means is controlled based on a control output of said n-th signal management control means.

7. The flat display device as set forth in any one of claims 3 to 6, wherein said first signal delay means receives an input of a frame start signal as said second signal and is N-staged D-type flip-flops (49a, 49b) settable and resettable based on an output of said signal stop detection means, where N is a positive integer.

8. The flat display device as set forth in claims 6 or 7, wherein said flat display body module unit incorporates a power source control means (78) for controlling power on/off of a display body power source means (28) for generating display body driving voltages on the basis of the output of said signal stop detection means and a fourth signal as well.

9. The flat display device as set forth in claim 8, wherein said power source control means includes a second signal delay means (78a, 78b) for delaying said second signal transferred from said display control unit by the output of said signal stop detection means.

10. The flat display device as set forth in claim 9, wherein said second signal delay means receives an input of a frame start signal as said second signal and is M-stages (M < N) D-type flip-flops settable and resettable based on the output of said signal stop detection means where M is a positive integer and N is a positive integer greater than one.

11. The flat display device as set forth in any one of claims 1 to 10, wherein said flat display body is a liquid crystal display panel.

12. The flat display device as set forth in any one of claims 1 to 10, wherein said flat display body is a plasma display panel.

13. A display body driving device (24, 46) for use on the side of a flat display body module unit (70) in a flat display device comprising a physically distinct and separately disposed flat body module unit and display control unit (10), for supplying display body driving voltages to a flat display body (22) on the basis of a variety of signals from the display control unit, said driving device comprising:
a signal detection means (48) for detecting an occurrence of abnormality of a first signal transferred from the side of said display control unit; and
a sequence processing means (51) for changing a signal mode on the side of said flat display body module unit on the basis of a detection output thereof.

14. The display body driving device as set forth in claim 13, wherein said signal detection means is a signal stop detection means for detecting a stop of said first signal, and said sequence processing means is a forced stop control means for control-setting, to zero, a display body application voltage supplied to said flat display body on the basis of an output of said signal stop detection means.

15. The display body driving device as set forth in claim 14, wherein said forced stop control means includes a first signal delay means (49) for delaying a second signal independence on an output of said signal stop detection means, said second signal being transferred from the side of said display control unit.

16. The display body driving device as set forth in claim 15, wherein said forced stop control means has a third signal input terminal (S), an output transmission of which is to be controlled.

17. The display body driving device as set forth in claim 16, wherein said signal delay means receives an input of a frame start signal as said second signal and is N-staged D-type flip-flops (49a, 49b) settable and resettable based on an output of said signal stop detection means where N is a positive integer.

18. The display body driving device as set forth in any one of claims 15 to 17, wherein said display body driving device includes a power source control means (78) for controlling power on/off of a display body power source means 28 for generating display body driving voltages on the basis of the output of said signal stop detection means and a fourth signal as well.

19. The display body driving device as set forth in claim 18, wherein said power source control means includes a second signal delay means (78a, 78b) for delaying said second signal transferred from said display control unit by the output of said signal stop detection means.

20. The display body driving device as set forth in claim 19, wherein said second signal delay means receives an input of a frame start signal as said second signal and is M-staged (M < N) D-type flip-flops settable and resettable based on the output of said signal stop detection means where M is a positive integer and N is a positive integer greater than one.

21. The display body driving device as set forth in any one of claims 13 to 20, wherein said display body driving device is a liquid crystal driving device for driving a liquid crystal display device panel.

22. The display body driving device as set forth in claim 21, wherein said liquid crystal driving device is a semiconductor integrated circuit.

23. The display body driving device as set forth in claim 22, wherein said semiconductor integrated circuit includes scan drivers (26).

24. The display body driving device as set forth in claim 23, wherein said scan drivers are scan drivers of a simple matrix liquid crystal display device.

25. The display body driving device as set forth in claim 23, wherein said scan drivers are gate drivers of an active matrix liquid crystal display device.

## Patentansprüche

1. Flachanzeigevorrichtung, umfassend:
- eine Flachanzeigekörper-Moduleinheit (40) mit einem Flachanzeigekörper (22) und Anzeigekörperansteuermitteln (24, 46) zum Ansteuern des Flachanzeigekörpers sowie
- eine von der Flachanzeigekörper-Moduleinheit körperlich getrennte und gesondert von dieser angeordnete Anzeigesteuereinheit (10) zum Steuern derselben, wobei die Flachanzeigekörperansteuermittel ferner ein Signalverwaltungssteuermittel (47) umfassen, welches ein Signalerfassungsmittel (48) zum Erfassen des Auftretens einer Anormalität in einem von der Anzeigesteuereinheit übermittelten ersten Signal sowie ein Folgeverarbeitungsmittel (51) zum Ändern einer Signalform auf Seiten der Flachanzeigekörper-Moduleinheit auf Grundlage des Erfassungssignals aufweist.

2. Flachanzeigevorrichtung nach Anspruch 1, bei der das Signalerfassungsmittel ein Signalstopperfassungsmittel zum Erfassen eines Stopps des ersten Signals ist und das Folgeverarbeitungsmittel ein Zwangsstoppsteuermittel ist, um die Null-Setzung einer dem Flachanzeigekörper zugeführten Anzeigekörperanlegespannung der Anzeigeansteuermittel auf Grundlage einer Ausgabe des Signalstopperfassungsmittels zu steuern.

3. Flachanzeigevorrichtung nach Anspruch 2, bei der das Zwangsstoppsteuermittel ein erstes Signalverzögerungsmittel (49) zum Verzögern eines zweiten Signals in Abhängigkeit einer Ausgabe des Signalstopperfassungsmittels umfaßt, wobei das zweite Signal von Seiten der Anzeigesteuereinheit übermittelt wird.

4. Flachanzeigevorrichtung nach Anspruch 3, bei der das Zwangsstoppsteuermittel einen Steueranschluß (S) eines dritten Signals umfaßt, von dem eine Ausgabeübertragung zu steuern ist.

5. Flachanzeigevorrichtung nach Anspruch 4, ferner umfassend n Einheiten des Signalverwaltungssteuermittels (47₁ - 47ₙ), wobei n eine positive ganze Zahl ist und Typen von erfaßten, als die ersten Signale den jeweiligen Signalverwaltungssteuermitteln eingegebenen Signalen voneinander verschieden sind.

6. Flachanzeigevorrichtung nach Anspruch 5, bei der eine Steuerausgabe eines k-ten Signalverwaltungssteuermittels ein drittes Signal eines (k + 1)-ten Signalverarbeitungssteuermittels ist, wobei k = 1, ..., n-1, n eine positive ganze Zahl größer als 2 ist und wobei die Anzeige-Ein/Ausschaltung der Anzeigekörperansteuermittel auf Grundlage einer Steuerausgabe des n-ten Signalverwaltungssteuermittels gesteuert wird.

7. Flachanzeigevorrichtung nach einem der Ansprüche 3 bis 6, bei der das erste Signalverzögerungsmittel eine Eingabe eines Bildstartsignals als das zweite Signal erhält und von N-stufig angeordneten D-Flip-Flops (49a, 49b) gebildet ist, welche auf Grundlage einer Ausgabe des Signalstopperfassungsmittels setzbar und rücksetzbar sind, wobei N eine positive ganze Zahl ist.

8. Flachanzeigevorrichtung nach Anspruch 6 oder 7, bei der die Flachanzeigekörper-Moduleinheit ein Energiequellensteuermittel (78) enthält, um die Energie-Zu/Abschaltung eines Anzeigekörperenergiequellenmittels (28) zur Erzeugung von Anzeigekörperansteuerspannungen auf Grundlage der Ausgabe des Signalstopperfassungsmittels sowie eines vierten Signals zu steuern.

9. Flachanzeigevorrichtung nach Anspruch 8, bei der das Energiequellensteuermittel ein zweites Signalverzögerungsmittel (78a, 78b) zum Verzögeren des von der Anzeigesteuereinheit übermittelten zweiten Signals mittels der Ausgabe des Signalstopperfassungsmittels umfaßt.

10. Flachanzeigevorrichtung nach Anspruch 9, bei der das zweite Signalverzögerungsmittel eine Eingabe eines Bildstartsignals als das zweite Signal erhält und von M-stufig angeordneten (M < N) D-Flip-Flops gebildet ist, welche auf Grundlage der Ausgabe des Signalstopperfassungsmittels setzbar und rücksetzbar sind, wobei M eine positive ganze Zahl ist und N eine positive ganze Zahl größer als Eins ist.

11. Flachanzeigevorrichtung nach einem der Ansprüche 1 bis 10, bei der der Flachanzeigekörper eine Flüssigkristall-Anzeigetafel ist.

12. Flachanzeigevorrichtung nach einem der Ansprüche 1 bis 10, bei der der Flachanzeigekörper eine Plasma-Anzeigetafel ist.

13. Anzeigekörperansteuervorrichtung (24, 46) zur Verwendung auf Seiten einer Flachanzeigekörper-Moduleinheit (70) in einer Flachanzeigevorrichtung, welche körperlich getrennt und gesondert angeordnet eine Flachkörper-Moduleinheit und eine Anzeigesteuereinheit (10) umfaßt, zur Zufuhr von Anzeigekörperansteuerspannungen zu einem Flachanzeigekörper (22) auf Grundlage einer Vielfalt von Signalen von der Anzeigesteuereinheit, wobei die Ansteuervorrichtung umfaßt:
- ein Signalerfassungsmittel (48) zum Erfassen des Auftretens einer Anormalität eines von Seiten der Anzeigesteuereinheit übermittelten ersten Signals und
- ein Folgeverarbeitungsmittel (51) zum Ändern eines Signalmodus auf Seiten der Flachanzeigekörper-Moduleinheit auf Grundlage einer Erfassungsausgabe davon.

14. Anzeigekörperansteuervorrichtung nach Anspruch 13, bei der das Signalerfassungsmittel ein Signalstopperfassungsmittel zum Erfassen eines Stopps des ersten Signals ist und das Folgeverarbeitungsmittel ein Zwangsstoppsteuermittel ist, um die Null-Setzung einer dem Flachanzeigekörper zugeführten Anzeigekörperanlegespannung auf Grundlage einer Ausgabe des Signalstopperfassungsmittels zu steuern.

15. Anzeigekörperansteuervorrichtung nach Anspruch 14, bei der das Zwangsstoppsteuermittel ein erstes Signalverzögerungsmittel (49) zum Verzögern eines zweiten Signals in Abhängigkeit einer Ausgabe des Signalstopperfassungsmittels umfaßt, wobei das zweite Signal von Seiten der Anzeigesteuereinheit übermittelt wird.

16. Anzeigekörperansteuervorrichtung nach Anspruch 15, bei der das Zwangsstoppsteuermittel einen Drittsignaleingabeanschluß (S) aufweist, von dem eine Ausgabeübertragung zu steuern ist.

17. Anzeigekörperansteuervorrichtung nach Anspruch 16, bei der das Signalverzögerungsmittel eine Eingabe eines Bildstartsignals als das zweite Signal erhält und von N-stufig angeordneten D-Flip-Flops (49a, 49b) gebildet ist, welche auf Grundlage einer Ausgabe des Signalstopperfassungsmittels setzbar und rücksetzbar sind, wobei N eine positive ganze Zahl ist.

18. Anzeigekörperansteuervorrichtung nach einem der Ansprüche 15 bis 17, bei der die Anzeigekörperansteuervorrichtung ein Energiequellensteuermittel (78) umfaßt, um die Energie-Zu/Abschaltung eines Anzeigekörperenergiequellenmittels (28) zur Erzeugung von Anzeigekörperansteuerspannungen auf Grundlage der Ausgabe des Signalstopperfassungsmittels sowie eines vierten Signals zu steuern.

19. Anzeigekörperansteuervorrichtung nach Anspruch 18, bei der das Energiequellensteuermittel ein zweites Signalverzögerungsmittel (78a, 78b) zum Verzögern des von der Anzeigesteuereinheit übermittelten zweiten Signals mittels der Ausgabe des Signalstopperfassungsmittels umfaßt.

20. Anzeigekörperansteuervorrichtung nach Anspruch 19, bei der das zweite Signalverzögerungsmittel eine Eingabe eines Bildstartsignals als das zweite Signal erhält und von M-stufig angeordneten (M < N) D-Flip-Flops gebildet ist, welche auf Grundlage der Ausgabe des Signalstopperfassungsmittels setzbar und rücksetzbar sind, wobei M eine positive ganze Zahl ist und N eine positive ganze Zahl größer als Eins ist.

21. Anzeigekörperansteuervorrichtung nach einem der Ansprüche 13 bis 20, bei der die Anzeigekörperansteuervorrichtung eine Flüssigkristall-Ansteuervorrichtung zur Ansteuerung einer Flüssigkristall-Anzeigevorrichtungstafel ist.

22. Anzeigekörperansteuervorrichtung nach Anspruch 21, bei der die Flüssigkristall-Ansteuervorrichtung eine integrierte Halbleiterschaltung ist.

23. Anzeigekörperansteuervorrichtung nach Anspruch 22, bei der die integrierte Halbleiterschaltung Abtasttreiber (26) umfaßt.

24. Anzeigekörperansteuervorrichtung nach Anspruch 23, bei der die Abtasttreiber Abtasttreiber einer einfachen Matrix-Flüssigkristall-Anzeigevorrichtung sind.

25. Anzeigekörperansteuervorrichtung nach Anspruch 23, bei der die Abtasttreiber Gate-Treiber einer aktiven Matrix-Flüssigkristall-Anzeigevorrichtung sind.

## Revendications

1. Dispositif d'affichage plat comprenant :
une unité formant module de corps d'affichage plat (40) comprenant un corps d'affichage plat (22) et des moyens d'attaque de corps d'affichage (24, 46) pour attaquer ledit corps d'affichage plat ; et
une unité de commande d'affichage (10) pour commander ladite unité formant module de corps d'affichage plat, physiquement distincte et disposée séparément de cette dernière, lesdits moyens d'attaque de corps d'affichage plat comprenant de plus des moyens de commande de gestion de signal (47) ayant des moyens de détection de signal (48) pour détecter la survenue d'une anomalie dans un premier signal transféré depuis ladite unité de commande d'affichage et des moyens de traitement de séquence (51) pour changer une forme de signal du côté de ladite unité formant module de corps d'affichage plat sur la base dudit signal de détection.

2. Dispositif d'affichage plat selon la revendication 1, dans lequel lesdits moyens de détection de signal sont des moyens de détection d'arrêt de signal pour détecter un arrêt dudit premier signal, et lesdits moyens de traitement de séquence sont des moyens de commande d'arrêt forcé pour le réglage, à zéro, d'une tension d'application de corps d'affichage, délivrée audit corps d'affichage plat, desdits moyens d'attaque d'affichage sur la base d'une sortie desdits moyens de détection d'arrêt de signal.

3. Dispositif d'affichage plat selon la revendication 2, dans lequel lesdits moyens de commande d'arrêt forcé comprennent des premiers moyens de retard de signal (49) pour retarder un deuxième signal en fonction d'une sortie desdits moyens de détection d'arrêt de signal, le deuxième signal étant transféré depuis le côté de ladite unité de commande d'affichage.

4. Dispositif d'affichage plat selon la revendication 3, dans lequel lesdits moyens de commande d'arrêt forcé comprennent une borne de commande (S) d'un troisième signal, dont une transmission de sortie est à commander.

5. Dispositif d'affichage plat selon la revendication 4, comprenant de plus n éléments de moyens de commande de gestion de signal (47₁ à 47ₙ) où n est un entier positif, et des types de signaux détectés entrés en tant que dits premiers signaux dans lesdits moyens de commande de gestion de signal respectifs sont différents les uns des autres.

6. Dispositif d'affichage plat selon la revendication 5, dans lequel une sortie de commande de k-ièmes moyens de commande de gestion de signal est un troisième signal de (k + 1)-ièmes moyens de commande de gestion de signal où k = 1, ..., n-1, n est un entier positif supérieur à 2, et la marche/arrêt d'affichage desdits moyens d'attaque de corps d'affichage est commandée sur la base d'une sortie de commande desdits n-ièmes moyens de commande de gestion de signal.

7. Dispositif d'affichage plat selon l'une quelconque des revendications 3 à 6, dans lequel lesdits premiers moyens de retard de signal reçoivent une entrée d'un signal de début d'image en tant que dit deuxième signal et sont constitués par des bascules du type D à N étages (49a, 49b) pouvant être mises à un et remises à zéro sur la base d'une sortie desdits moyens de détection d'arrêt de signal, où N est un entier positif.

8. Dispositif d'affichage plat selon les revendications 6 ou 7, dans lequel ladite unité formant module de corps d'affichage plat réunit des moyens de commande de source de courant (78) pour commander la marche/arrêt de courant de moyens formant source de courant de corps d'affichage (28) afin de produire des tensions d'attaque de corps affichage sur la base de la sortie desdits moyens de détection d'arrêt de signal et également un quatrième signal.

9. Dispositif d'affichage plat selon la revendication 8, dans lequel lesdits moyens de commande de source de courant comprennent des seconds moyens de retard de signal (78a, 78b) pour retarder ledit deuxième signal transféré depuis ladite unité de commande d'affichage par la sortie desdits moyens de détection d'arrêt de signal.

10. Dispositif d'affichage plat selon la revendication 9, dans lequel lesdits seconds moyens de retard de signal reçoivent une entrée d'un signal de début d'image en tant que dit deuxième signal et sont constitués par des bascules du type D à M étages (M < N) pouvant être mises à un et remises à zéro sur la base de la sortie desdits moyens de détection d'arrêt de signal où M est un entier positif et N est un entier positif supérieur à un.

11. Dispositif d'affichage plat selon l'une quelconque des revendications 1 à 10, dans lequel ledit corps d'affichage plat est un panneau d'affichage à cristaux liquides.

12. Dispositif d'affichage plat selon l'une quelconque des revendications 1 à 10, dans lequel ledit corps d'affichage plat est un panneau d'affichage à plasma.

13. Dispositif d'attaque de corps d'affichage (24, 26) à utiliser du côté d'une unité formant module de corps d'affichage plat (70) dans un dispositif d'affichage plat comprenant une unité formant module de corps plat physiquement distincte et disposée séparément et une unité de commande d'affichage (10), pour délivrer des tensions d'attaque de corps d'affichage à un corps d'affichage plat (22) sur la base d'une variété de signaux en provenance de l'unité de commande d'affichage, ledit dispositif d'attaque comprenant :
des moyens de détection de signal (48) pour détecter la survenue d'une anomalie d'un premier signal transféré depuis le coté d'une unité de commande d'affichage ; et
des moyens de traitement de séquence (51) pour changer un mode de signal du côté de ladite unité formant module de corps d'affichage plat sur la base d'une sortie de détection de ces derniers.

14. Dispositif d'attaque de corps d'affichage selon la revendication 13, dans lequel lesdits moyens de détection de signal sont des moyens de détection d'arrêt de signal pour détecter un arrêt dudit premier signal, et lesdits moyens de traitement de séquence sont des moyens de commande d'arrêt forcé pour le réglage, à zéro, d'une tension d'application de corps d'affichage, délivrée audit corps d'affichage plat sur la base d'une sortie desdits moyens de détection d'arrêt de signal.

15. Dispositif d'attaque de corps d'affichage selon la revendication 14, dans lequel lesdits moyens de commande d'arrêt forcé comprennent des premiers moyens de retard de signal (49) pour retarder un deuxième signal en fonction d'une sortie desdits moyens de détection d'arrêt de signal, ledit deuxième signal étant transféré depuis ledit côté de ladite unité de commande d'affichage.

16. Dispositif d'attaque de corps d'affichage selon la revendication 15, dans lequel lesdits moyens de commande d'arrêt forcé comprennent une borne d'entrée (S) d'un troisième signal, dont une transmission de sortie est à commander.

17. Dispositif d'attaque de corps d'affichage selon la revendication 16, dans lequel lesdits moyens de retard de signal reçoivent une entrée d'un signal de début d'image en tant que dit deuxième signal et sont constitués par des bascules du type D à N étages (49a, 49b) pouvant être mises à un et remises à zéro sur la base d'une sortie desdits moyens de détection d'arrêt de signal, où N est un entier positif.

18. Dispositif d'attaque de corps d'affichage selon l'une quelconque des revendications 15 à 17, dans lequel ledit dispositif d'attaque de corps d'affichage comprend des moyens de commande de source de courant (78) pour commander la marche/arrêt de courant de moyens formant source de courant de corps d'affichage (28) pour produire des tensions d'attaque de corps affichage sur la base de la sortie desdits moyens de détection d'arrêt de signal et également un quatrième signal.

19. Dispositif d'attaque de corps d'affichage selon la revendication 18, dans lequel lesdits moyens de commande de source de courant comprennent des seconds moyens de retard de signal (78a, 78b) pour retarder ledit deuxième signal transféré depuis ladite unité de commande d'affichage par la sortie desdits moyens de détection d'arrêt de signal.

20. Dispositif d'attaque de corps d'affichage selon la revendication 19, dans lequel lesdits seconds moyens de retard de signal reçoivent une entrée d'un signal de début d'image en tant que dit deuxième signal et sont constitués par des bascules du type D à M étages (M < N) pouvant être mises à un et remises à zéro sur la base de la sortie desdits moyens de détection d'arrêt de signal où M est un entier positif et N est un entier positif supérieur à un.

21. Dispositif d'attaque de corps d'affichage selon l'une quelconque des revendications 13 à 20, dans lequel ledit dispositif d'attaque de corps d'affichage est un dispositif d'attaque de cristaux liquides pour attaquer un panneau formant dispositif d'affichage à cristaux liquides.

22. Dispositif d'attaque de corps d'affichage selon la revendication 21, dans lequel ledit dispositif d'attaque de cristaux liquides est un circuit intégré à semiconducteur.

23. Dispositif d'attaque de corps d'affichage selon la revendication 22, dans lequel ledit circuit intégré à semiconducteur comprend des circuits d'attaque de balayage (26).

24. Dispositif d'attaque de corps d'affichage selon la revendication 23, dans lequel lesdits circuits d'attaque de balayage sont des circuits d'attaque de balayage d'un dispositif d'affichage à cristaux liquides à matrice simple.

25. Dispositif d'attaque de corps d'affichage selon la revendication 23, dans lequel lesdits circuits d'attaque de balayage sont des circuits d'attaque de grille d'un dispositif d'affichage à cristaux liquides à matrice active.
